# EUROPEAN PATENT SPECIFICATION

(11) **EP 2 578 287 B1**
(45) Date of publication and mention of the grant of the patent: **14.06.2017**
(21) Application number: 12006251.8
(22) Date of filing: 05.09.2012
(51) Int. Cl.: B01D 17/02, F16K 31/18, F16K 33/00

(54) **Automatic closure device and method of mounting**
Automatische Verschlussvorrichtung und Montageverfahren
Dispositif de fermeture automatique et procédé de montage

(30) Priority: 05.10.2011 NL 1039091
(43) Date of publication of application: 10.04.2013
(73) Proprietor: Wavin B.V., 8011 CW Zwolle (NL)
(72) Inventor: Roelfsema, Marcel, 7701 BS Dedemsvaart (NL); Vos, Bastiaan, 7701 BS Dedemsvaart (NL)
(74) Representative: Hoffmann Eitle

(56) References cited:
- WO-A1-2004/027175
- DE-U1- 29 508 044
- FR-A1- 2 923 399
- US-A- 1 897 313

## Description

### Technical Field

The present invention is directed to an automatic closure device for selectively closing a drain as well as a corresponding method of mounting such an automatic closure device.

Such an automatic closure device can be applied in a light liquid separator, in particular an oil separator.

Oil separators are fitted to surface water drainage systems to prevent pollution by oils and to protect the environment. The Groundwater Regulations, for example, prohibit discharge into the ground and/or watercourses of pollutants such as hydrocarbons (oils, greases, fuel etc.). Oil Separators separate oil from the water, retaining it safely until it is removed. Oil separators need to be correctly designed, installed and maintained to be fully effective.

Oil may be contaminating surface water at various sites. Sites need to have measures in place to prevent oil polluting the environment. These include, among others:
- vehicle maintenance and wash-off areas
- car parks typically larger than 800m² in area or for 50 or more car parking spaces
- smaller car parks discharging to a sensitive environment
- areas where goods vehicles are parked or manoeuvred
- roads
- industrial sites where oil is stored or used
- refuelling facilities
- any other site with a risk of oil contamination.

The various types of oil separators available include so-called full retention separators, which treat the full flow that can be delivered by the drainage system, normally equivalent to rainfall intensity of 65 mm/hour. These oil separators must be provided with an automatic closure device which effectively closes the system in case too much oil is in the system.

### Prior Art

Various designs of automatic closure devices (ACD) are known in the art as safety devices for light liquid separators such as oil separators. They are mostly operating on the basis of the fact that most oils are immiscible with water and, due to their lower density, tend to rise to the surface of the water. In general the separators provide a containment in which the oil and water mixtures are permitted a period of aquiescence during which the lighter density oil rises to the surface of the water. The heavier density water is drained from the lower portion of the containment.

When the separator becomes full with oil, it must be pumped out or the oil must be removed by some other means. Otherwise the oil will start flowing out through the water drain.

Prior art devices are known which automatically close water drains in such containments to prevent the accidental discharge of oil by utilizing the lower density of the oil to effect the sinking of a float which in turn seals off the water drain. US 4,132,238 discloses an example of such a device, which blocks the drain as soon as a certain oil layer thickness is reached, so that no more liquid is directed to the sewerage system.

US 1,897,313 teaches a light liquid separator having a main closing member and an additional closing member which is adapted to reduce the effective cross-sectional width of passage of the separator.

WO 2004/027175 teaches flushing apparatus used in water treatment and irrigation comprising a reservoir for accumulating liquid, having an inlet for receiving liquid and an outlet chamber recessed in the bottom wall of the reservoir. The outlet chamber includes an outlet for draining liquid out of the reservoir. The apparatus further comprises an outlet valve movable between a down position where liquid accumulates in the reservoir and a raised position where liquid accumulated in the reservoir is flushed out via the outlet. The outlet valve comprises a ballast unit sized and shaped to fit loosely in the outlet chamber when the valve is in the down position, and a float unit topping the ballast unit to move the valve in the raised position by buoyancy when a sufficient amount of liquid is accumulated in the reservoir, thereby providing a passageway for liquid between the bottom wall of the reservoir and the valve leading to the outlet in the outlet chamber to flush liquid out of the reservoir. Guiding means are provided for guiding the outlet valve between the down position and the raised position.

FR 2923399 teaches a closure device for a light liquid separator having a plug which is displaceable by a cylindrical master float, and, when the plug is applied on a base, the device is in its closed position. The float has a sealed hollow part communicating with a hollow tube extended towards the top. The tube has an opened top end provided above the floating level of the float in a flowing heavy liquid, such that the hollow part is filled with a light liquid and the floatability of the float is lost when the level of the light liquid floating on the flowing heavy liquid exceeds a predetermined height.

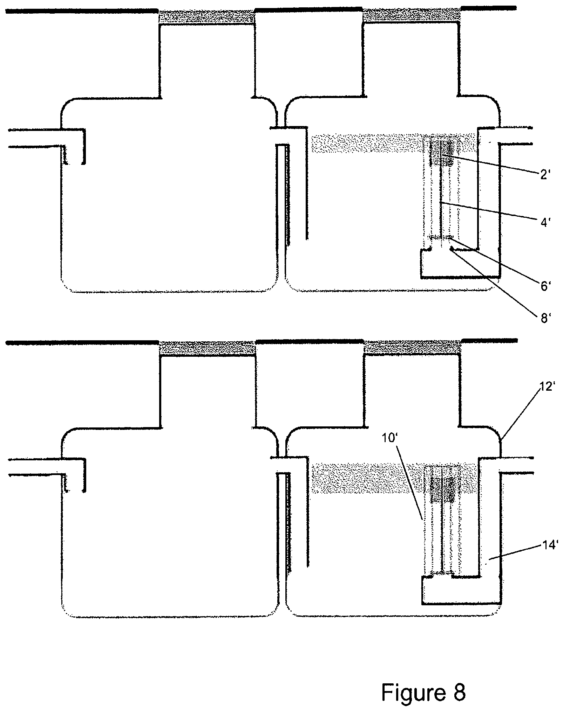

Figure 8 shows a prior art ACD in the open (above) and closed (below) positions. The ACD basically consists of a floater 2' connected via a suspension rod 4' to a valve plug 6' which in the closed position rests on a valve seat 8'. The floater 2' is calibrated so that it floats in water but sinks in light liquid products, such as oil products. The ACD is mounted within a guiding pipe 10' situated within the oil separator vessel 12' and closes a drain 14' from the vessel as soon as a certain oil layer thickness is reached.

As the floater and the valve plug are connected by the rod at a fixed distance, it is sometimes difficult for the operator to mount this ACD in a narrow position at big installation depths. The floater and/or the valve plug can hook at the edge of the guiding pipe, and the operator does not receive any feedback as to whether the ACD is positioned correctly.

### Disclosure of the invention

It is the object underlying the present invention to provide an automatic closure device which can be mounted more easily, as well as a corresponding method of mounting such an automatic closure device.

This object is achieved, on the one hand, by an automatic closure device comprising the features of claim 1. The automatic closure device (ACD) is provided for use in a light liquid separator and comprises a floater arranged for floating on a liquid surface inside the separator; a valve plug for selectively closing a drain of the separator, and a suspension element for suspending both the valve plug and the floater inside the separator.

In accordance with the invention, means are provided for releasably engaging the floater with the valve plug, so that the floater and the valve plug can assume either a mounting position, in which they are engaged with each other, or an operating position, in which they are disengaged and spaced by a certain distance from each other. The distance between the floater and the valve plug in the operating position is determined by a retaining element.

Consequently, the floater and valve plug can be engaged with each other so as to constitute an entity. This is particularly useful for the purpose of mounting the ACD inside the separator, e.g. in a guiding pipe provided therein: the floater and valve plug are lowered into the guiding pipe in a state in which they are engaged with each other. This greatly facilitates the mounting process, and the risk of the floater and/or the plug becoming stuck in the guiding pipe is reduced.

As soon as the ACD has been mounted inside the guiding pipe, the engagement between the floater and the valve plug is released, and the floater is allowed to assume an operating position in which it is spaced at a certain distance from the valve plug.

With the construction of the invention it is easily possible to put the ACD in place and take it out again, even when the separator is installed at a level of > 2,5 m below the pavement or ground level.

Preferred optional features are recited in the dependent claims.

The suspension element is preferably a flexible, rope-like element. This facilitates swinging the ACD into the separator or the guide pipe, respectively. The suspension element could, however, also be a rigid, rod-like element or include a combination of both.

In both cases, it is preferable that the suspension element, i.e. the rod or rope, is guided through the floater so that the floater can move along the suspension element, whereas the valve plug is fixed to the lower end of the suspension element. As soon as the floater has been disengaged from the valve plug it can then move along the suspension element into its operating position.

The releasable engagement between the floater and the valve plug can be suitably achieved by a releasable form fit or friction fit between the two elements. The engagement can be a direct one, e.g. insofar as the valve plug has a conical top and the floater has a conical clearance at the bottom which matches with the conical top of the valve plug so as to provide the engagement between the two elements. An indirect engagement between the floater and valve plug via an intermediate element could also be considered.

Similar as the valve plug, the floater can also have a conical top. The conical top prevents the settlement of deposits which could change the upward force acting on the floater when submerged in a liquid.

The retaining element for determining the distance between the floater and the valve plug in the operating position is suitably provided in the form of a stop provided on the suspension element. If the position of the stop is adjustable along the suspension element, the ACD can be adjusted to different places of installation or different maximum allowable oil layer thicknesses, respectively.

Finally, the automatic closure device may further include a locking device for preventing the valve plug from being flushed out of the separator. This is due to another requirement for an ACD of this type: it should still function after the separator has been flooded. With prior art arrangements there have been cases in which the ACDs were flushed out of the oil separators when the water level therein became excessively high. In the ACD of the present invention, a locking means is provided which prevents the valve plug from coming out of the guiding pipe in case of high water level in the tank. The locking means are dimensioned in such a way that the floater can pass freely, but the valve plug not.

The automatic closure device may further include a guiding pipe in which the floater and the valve plug are movably provided. The locking means could then for example be constituted by a locking spring provided at the top of the guiding pipe.

The locking spring is designed so as to let the valve plug and the floater engaged therewith pass for being mounted inside the guiding pipe, while preventing the valve plug from coming out again unless a substantial force is applied by the operator pulling on the rope. If there is a situation of high water, the spring holds the valve plug within the guiding pipe.

On the other hand, the above object is achieved by a method of mounting an automatic closure device within a light liquid separator, including the steps recited in claim 14.

In the method of the invention, a floater is provided which is arranged for floating on a liquid surface inside the separator. A valve plug is provided for selectively closing a drain of the separator. A suspension element is provided for suspending both the valve plug and the floater inside the separator. In accordance with the invention, the floater is engaged with the valve plug, the device is mounted into the separator while the floater is engaged with the valve plug, and the floater is subsequently disengaged from the valve plug and spaced by a certain distance therefrom, which distance is determined by means of a retaining element.

For dismounting the ACD again from the separator the valve plug and the floater can be engaged again with each other.

### Brief description of the drawings

In the attached drawings,
Figure 1 shows an automatic closure device (ACD) according to an embodiment of the present invention, mounted within a guiding pipe inside an oil separator vessel;
Figure 2 is an enlarged view of the ACD within the guiding pipe;
Figure 3 is an enlarged view of the ACD;
Figure 4 shows the ACD in a mounting position and in a first operating position;
Figure 5 shows the ACD in a mounting position and in a second operating position;
Figure 6 is a schematic view of the ACD in the mounting position;
Figure 7 is another enlarged view of the ACD within the guiding pipe; and
Figure 8 shows a prior art ACD in the open and closed positions.

### Detailed description of a preferred embodiment

An ACD according to an embodiment of the present invention as well as a method of mounting it inside an oil separator vessel will now be described in detail with reference to the attached drawings.

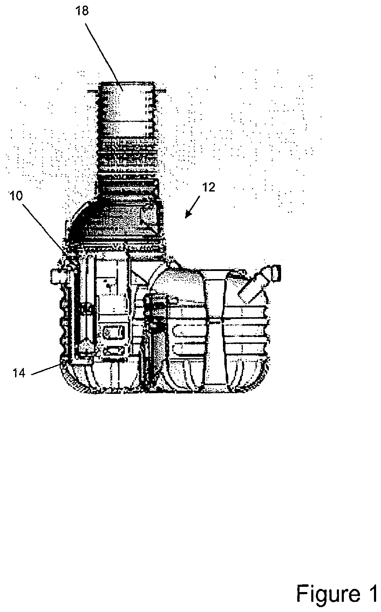

Figure 1 shows an automatic closure device (ACD) according to an embodiment of the present invention, mounted within a guiding pipe 10 inside an oil separator vessel 12. The ACD works as a safety device for the oil separator and blocks a drain 14 of the vessel 12 as soon as a certain oil layer thickness is reached, so that no more liquid is directed through the drain 14 and into the sewerage system. The separator 12, guiding pipe 10 and drain 14 are constituted in a manner known as such, the drain 14 including a horizontal conduit and a riser.

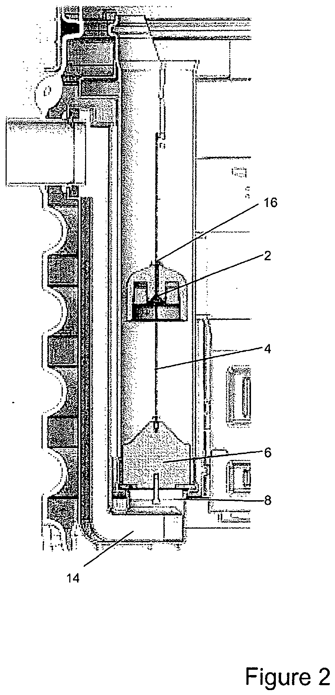

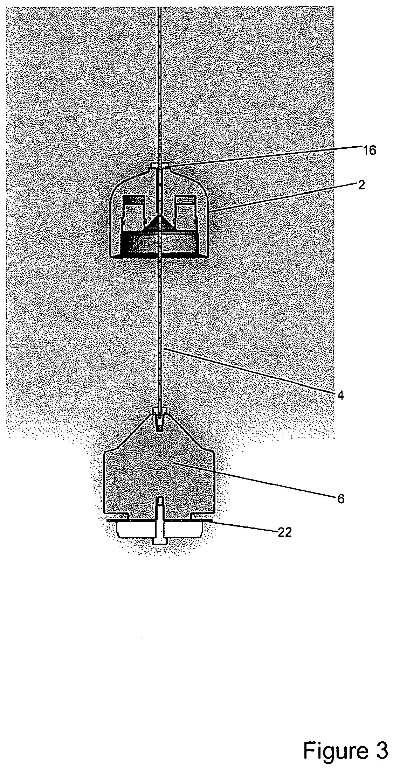

Figure 2 is an enlarged view of the ACD within the guiding pipe, and Figure 3 is an enlarged view of only the ACD. The ACD basically consists of a floater 2 connected via a suspension rope 4 to a valve plug 6 which in the closed position rests on a valve seat 8. The floater 2 is calibrated so that it floats in water but sinks in oil. The rope 4 is guided through the floater 2 so that the floater 2 can move along the rope 4, whereas the valve plug 6 is tied to the lower end of the rope 4.

In the ACD of the invention, means are provided for selectively engaging the valve plug 6 with the floater 2 and disengaging the valve plug 6 from the floater 2. The floater 2 and valve plug 6 can be engaged with each other so as to constitute an entity. This is particularly useful for the purpose of mounting the ACD inside the guiding pipe 10: the floater 2 and valve plug 6 are lowered into the guiding pipe 10 in a state in which they are engaged with each other. This greatly facilitates the mounting process, and the risk of the floater 2 and/or the plug 6 becoming stuck in the guiding pipe 10 is reduced.

In the present embodiment, the engagement between the valve plug 6 and the floater 2 is reached by the conical top of the valve plug 6 fitting together with a correspondingly shaped clearance at the bottom of the floater 2.

As soon as the ACD has been mounted inside the guiding pipe 10, the engagement between the floater 2 and the valve plug 6 is released. With the construction of the present embodiment, this can be simply done by the operator giving a tug to the rope 4. Through this action the floater 2 will come loose from the valve plug 6. The floater 2 will assume an operating position in which it is spaced at a certain distance from the valve plug 6.

Reference numeral 18 designates a vertical entrance shaft through which the floater 2 and valve plug 6 are mounted.

Once it has been mounted inside the guiding pipe 10 in the manner just described, the ACD operates as follows: the floater 2 floats on the surface of the water level in the vessel 12. Waste water, which contains oil, enters the vessel through its inlet. At this time the water level inside the vessel 12 and therefore also inside the guiding pipe 10 is such that the floater 2 keeps the valve plug 6 at a distance from the drain 14, so that excess water can flow out of the drain 14. The guiding pipe 10 is situated above the valve seat 8 which constitutes the entrance to the drain 14. On that account water can flow from the separator 12 into the drain 14.

After a while, the oil layer on top of the water surface becomes thicker. As the amount of accumulated oil at the surface within the separator increases, the level of the oil-water interface is lowered. The floater 2 floats on the water, and as the water level decreases, the floater 2 sinks. The floater 2 is restricted in its movement by the guiding pipe 10, which maintains the floater 2 and the valve plug 6 suspended thereon in a position directly above the valve seat 8.

As the distance between the floater 2 and the valve plug 6 is constant the valve plug 6 is also sinking. At certain point, when the oil layer reaches a certain (maximum) thickness, the valve plug closes the drain 14. A signal will alarm an operator. The oil separator should now be cleaned.

The distance by which the two elements, i.e. the floater 2 and the valve plug 6, are apart is determined by the position of a retaining element in the form of a stop 16 placed on the rope 4. The distance can be adjusted by sliding the stop 16 along the rope 4.

Reference numeral 22 designates a seal ring provided on the valve plug 6 so as to efficiently close the drain 14.

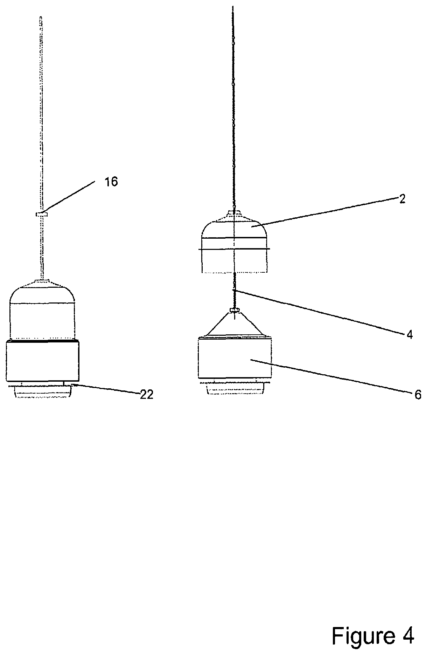

Figure 4 shows the ACD in a mounting position and in a first operating position. In the mounting position (left hand side), the floater 2 and the valve plug 6 are engaged with each other in the manner described above. As soon as they have been disengaged, the floater 2 moves into an operating position determined by the position of the stop 16 on the rope 4.

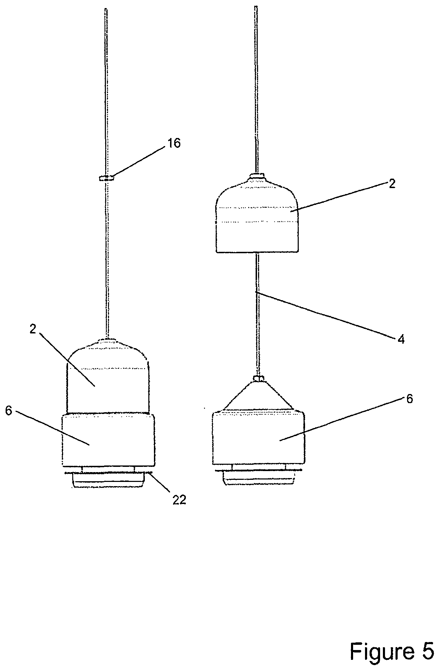

Figure 5 shows the ACD in a mounting position (left) and in a second operating position (right). If compared with Figure 4 the stop 16 has been placed at a higher location along the rope 4. Once it has been disengaged from the valve plug 6, the floater 2 moves into the operating position defined by the stop 16.

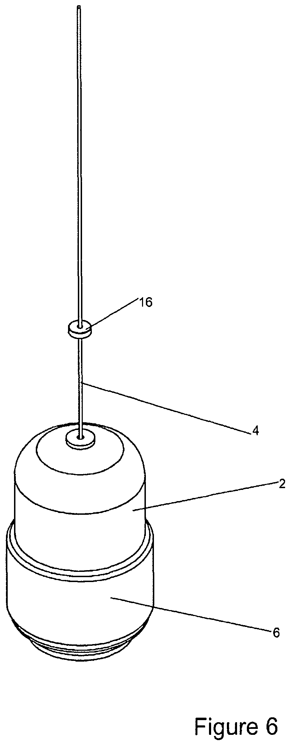

Figure 6 is a schematic view of the ACD in the mounting position, once again making it clear how the floater 2 and valve plug 6 are engaged with each other while they are still spaced from the stop 16.

For dismounting the ACD from the guiding pipe 10, the floater 2 and plug 6 are again engaged with each other.

With the construction of the invention it is easily possible to put the ACD in place and take it out again, even when the separator is installed at a level of > 2,5 m below the pavement or ground level.

The ACD can easily be swung in place because it is connected to the long rope 4 that reaches the surface. Due to the engagement between the floater 2 and the plug 6 in the mounting position, the ACD is a compact module when swung in.

In the embodiment shown in the drawings, both the valve plug 6 and the floater 2 have a conical top, which prevents the settlement of deposits which could change the upward force acting on the floater 2 when submerged in a liquid.

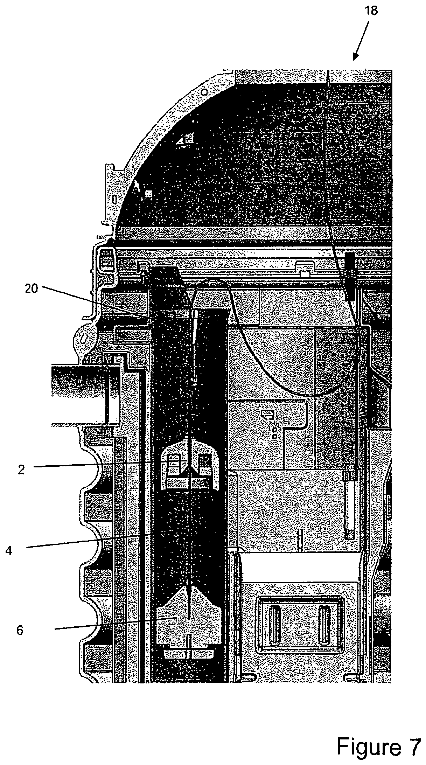

Another requirement for an ACD of this type is that it should still function after the separator has been flooded. With prior art arrangements there have been cases in which the ACDs were flushed out of the oil separators when the water level therein became excessively high. In the ACD of the present invention, a locking means is provided which prevents the valve plug from coming out of the guiding pipe 10 in case of high water level in the tank. In the present embodiment, this locking means is constituted by a locking spring 20 provided at the top of the guiding pipe 10 (see Figure 7).

The locking spring 20 is designed so as to let the valve plug 6 and the floater 2 engaged therewith pass for being mounted inside the guiding pipe 10, while preventing the valve plug 6 from coming out again unless a substantial force is applied by the operator pulling at the rope 4. If there is a situation of high water, the spring 20 holds the valve plug 6 within the guiding pipe 10. Due to water flowing into the guiding pipe at the upper side the floater 2 encounters a pressure which will hold the floater 2 into the guiding pipe. When the oil separator has to be cleaned, or maintenance work is to be done, the separator is emptied of all liquid (oil and water), and the floater 2 will sink onto the valve plug 6. Thereafter the operator has to pull out the assembly of floater 2 and valve plug 6 through the entrance 18. For this purpose, the first part of the conical top 24 of the valve plug 6 is slightly inclined (about 10 degrees with respect to the horizontal direction in the present embodiment), so as to allow it to pass the locking spring 20. If the inclination is too small, the valve plug 6 cannot pass the spring 20. If the first part of the conical top 24 of the valve plug 6 is too strongly inclined, the valve plug 6 will pass the locking spring 20 too easily, also without any force being applied by the operator, if the water level becomes excessively high.

From Figure 7 it also becomes clear how the rope further extends towards the entrance 18. A part of the rope length between the floater 2 and the entrance will float on the surface of the liquid inside the separator.

The invention has been explained above with reference to a particular embodiment thereof. However, the invention is not restricted to this embodiment.

In particular, the ACD of the above embodiment is used within an oil separator. ACDs of the present invention can, however, also be used in other devices which require the separation of light liquids.

## Claims

1. An automatic closure device for use in a light liquid separator (12), comprising:
a floater (2) arranged for floating on a liquid surface inside the separator (12),
a valve plug (6) for selectively closing a drain (14) of the separator (12), and
a suspension element (4) for suspending both the valve plug (6) and the floater (2) inside the separator (12),
the suspension element (4) being guided through the floater (2) so that the floater (2) can move along the suspension element (4), whereas the valve plug (6) is fixed to the lower end of the suspension element (4),
wherein means are provided for releasably engaging the floater (2) with the valve plug (6),
said releasable engagement means being one of the group consisting of: a releasable form fit or friction fit between the floater and the valve plug; an indirect engagement between the floater and valve plug via an intermediate element,
so that the floater (2) and the valve plug (6) can assume either a mounting position, in which they are engaged with each other, or an operating position, in which they are disengaged and spaced by a certain distance from each other, wherein the distance between the floater (2) and the valve plug (6) in the operating position is determined by a retaining element (16),
and the retaining element is a stop (16) provided on the suspension element (4), the position of the stop (16) being adjustable along the suspension element (4).

2. The automatic closure device of claim 1, in which the suspension element (4) is at least partly constituted by a flexible, rope-like element.

3. The automatic closure device of claim 1 or 2, in which the suspension element is at least partly constituted by a rigid, rod-like element.

4. The automatic closure device of any one of the preceding claims, in which the releasable engagement between the floater (2) and the valve plug (6) is achieved by a releasable form fit or friction fit between the two elements.

5. The automatic closure device of any one of the preceding claims, in which the valve plug (6) has a conical top.

6. The automatic closure device of claim 5, in which the floater (2) has a conical clearance at the bottom which matches with the conical top of the valve plug (6) so as to allow the engagement between the two elements.

7. The automatic closure device of any one of the preceding claims, in which the floater (2) has a conical top.

8. The automatic closure device of any one of the preceding claims, further including a locking device (20) for preventing the floater (2) and the valve plug (6) from being flushed out of the separator (12).

9. The automatic closure device of any one of the preceding claims, further including a guiding pipe (10) in which the floater (2) and the valve plug (6) are movably provided.

10. The automatic closure device of claim 8 and 9, in which the locking device is constituted by a locking spring (20) arranged in the upper area of the guiding pipe (10).

11. A method of mounting an automatic closure device within a light liquid separator (12) such as an oil separator, including the steps of:
providing a floater (2) arranged for floating on a liquid surface inside the separator (12),
providing a valve plug (6) for selectively closing a drain (14) of the separator (12), and
providing a suspension element (4) for suspending both the valve plug (6) and the floater (2) inside the separator (12),
**characterized in that**
the floater (2) is engaged with the valve plug (6), the device is mounted into the separator (12) while the floater (2) is engaged with the valve plug (6), and
the floater (2) is subsequently disengaged from the valve plug (6) and spaced by a certain distance therefrom, which distance is determined by means of a retaining element (16).

12. The method of claim 11, including the additional step of engaging the floater (2) and the valve plug (6) for dismounting them from the separator (12).

## Patentansprüche

1. Automatische Verschlussvorrichtung zur Verwendung in einem Leichtflüssigkeitsabscheider (12), umfassend:
einen Schwimmer (2), der zum Schwimmen auf einer sich im Inneren des Abscheiders (12) befindlichen Flüssigkeitsoberfläche angeordnet ist,
einen Ventilschließkörper (6) für das selektive Verschließen eines Abflusses (14) des Abscheiders (12) und
ein Aufhängungselement (4) für das Aufhängen des Ventilschließkörpers (6) sowie auch des Schwimmers (2) im Inneren des Abscheiders (12),
wobei das Aufhängungselement (4) durch den Schwimmer (2) geführt wird, sodass der Schwimmer (2) sich entlang des Aufhängungselements (4) bewegen kann, während der Ventilschließkörper (6) an das untere Ende des Aufhängungselements (4) befestigt ist,
wobei Einrichtungen zum lösbaren Eingreifen des Schwimmers (2) in den Ventilschließkörper (6) bereitgestellt werden,
wobei die lösbare Eingriffseinrichtung eine aus der Gruppe bestehend aus den Folgenden ist: einem lösbaren Formschluss oder Reibschluss zwischen dem Schwimmer und dem Ventilschließkörper; einem indirekten Eingriff zwischen dem Schwimmer und dem Ventilschließkörper über ein Zwischenelement,
sodass der Schwimmer (2) und der Ventilschließkörper (6) entweder eine Montageposition, in der sie miteinander in Eingriff stehen, oder eine Betriebsposition, in der sie voneinander gelöst und in einem bestimmten Abstand voneinander beanstandet sind, einnehmen können, wobei der Abstand zwischen dem Schwimmer (2) und dem Ventilschließkörper (6) in der Betriebsposition von einem Halteelement (16) bestimmt wird,
und wobei das Halteelement ein Anschlag (16) ist, der am Aufhängungselement (4) bereitgestellt wird, wobei die Position des Anschlags (16) entlang des Aufhängungselements (4) verstellbar ist.

2. Automatische Verschlussvorrichtung nach Anspruch 1, in welcher das Aufhängungselement (4) zumindest teilweise aus einem flexiblen, seilähnlich ausgebildeten Element gebildet ist.

3. Automatische Verschlussvorrichtung nach Anspruch 1 oder 2, in welcher das Aufhängungselement zumindest teilweise aus einem starren, stangenähnlich ausgebildeten Element gebildet ist.

4. Automatische Verschlussvorrichtung nach einem der vorherigen Ansprüche, in welcher der lösbare Eingriff zwischen dem Schwimmer (2) und dem Ventilschließkörper (6) mittels eines lösbaren Formschlusses oder Reibschlusses zwischen den zwei Elementen erzielt wird.

5. Automatische Verschlussvorrichtung nach einem der vorherigen Ansprüche, in welcher der Ventilschließkörper (6) über eine kegelförmige Spitze verfügt.

6. Automatische Verschlussvorrichtung nach Anspruch 5, in welcher der Schwimmer (2) an der Unterseite über eine kegelförmige Aufnahmeausnehmung verfügt, die mit der kegelförmigen Spitze des Ventilschließkörpers (6) übereinstimmt, um einen Eingriff zwischen den zwei Elementen zu ermöglichen.

7. Automatische Verschlussvorrichtung nach einem der vorherigen Ansprüche, in welcher der Schwimmer (2) über eine kegelförmige Spitze verfügt.

8. Automatische Verschlussvorrichtung nach einem der vorherigen Ansprüche, die ferner eine Verriegelungsvorrichtung (20) einschließt, um zu verhindern, dass der Schwimmer (2) und der Ventilschließkörper (6) aus dem Abscheider (12) herausgespült werden.

9. Automatische Verschlussvorrichtung nach einem der vorherigen Ansprüche, die ferner ein Führungsrohr (10) einschließt, in dem der Schwimmer (2) und der Ventilschließkörper (6) bewegbar bereitgestellt werden.

10. Automatische Verschlussvorrichtung nach Anspruch 8 und 9, in welcher die Verriegelungsvorrichtung aus einer im oberen Bereich des Führungsrohrs (10) angeordneten Rastfeder (20) gebildet ist.

11. Verfahren zum Montieren einer automatischen Verschlussvorrichtung innerhalb eines Leichtflüssigkeitsabscheiders (12), wie etwa eines Ölabscheiders, das die folgenden Schritte einschließt:
Bereitstellen eines Schwimmers (2), der zum Schwimmen auf einer sich im Inneren des Abscheiders (12) befindlichen Flüssigkeitsoberfläche angeordnet ist,
Bereitstellen eines Ventilschließkörpers (6) für das selektive Verschließen eines Abflusses (14) des Abscheiders (12), und
Bereitstellen eines Aufhängungselements (4) für das Aufhängen des Ventilschließkörpers (6) sowie auch des Schwimmers (2) im Inneren des Abscheiders (12),
**dadurch gekennzeichnet, dass**
der Schwimmer (2) mit dem Ventilschließkörper (6) in Eingriff steht, die Vorrichtung im Abscheider (12) montiert ist, während der Schwimmer (2) mit dem Ventilschließkörper (6) in Eingriff steht, und
der Schwimmer (2) anschließend vom Ventilschließkörper (6) gelöst und in einem bestimmten Abstand davon beanstandet wird, dessen Entfernung mittels eines Halteelements (16) ermittelt wird.

12. Verfahren nach Anspruch 11, das den zusätzlichen Schritt des Eingreifens des Schwimmers (2) und des Ventilschließkörpers (6) für das Abmontieren davon vom Abscheider (12) einschließt.

## Revendications

1. Dispositif de fermeture automatique à utiliser dans un séparateur de liquide léger (12), comprenant :
un flotteur (2) agencé pour flotter sur une surface de liquide à l'intérieur du séparateur (12),
un clapet (6) pour fermer de manière sélective une évacuation (14) du séparateur (12), et
un élément de suspension (4) pour suspendre tant le clapet (6) que le flotteur (2) à l'intérieur du séparateur (12),
l'élément de suspension (4) étant guidé à travers le flotteur (2) de sorte que le flotteur (2) peut se déplacer le long de l'élément de suspension (4), tandis que le clapet (6) est fixé à l'extrémité inférieure de l'élément de suspension (4),
dans lequel des moyens sont prévus pour mettre en prise de façon amovible le flotteur (2) avec le clapet (6),
lesdits moyens de mise en prise amovible étant l'un du groupe constitué par : un ajustement amovible par forme ou friction entre le flotteur et le clapet; une mise en prise indirecte entre le flotteur et le clapet via un élément intermédiaire,
de sorte que le flotteur (2) et le clapet (6) peuvent prendre soit une position de montage, dans laquelle ils sont en prise l'un avec l'autre, soit une position de fonctionnement, dans laquelle ils sont dégagés et espacés d'une certaine distance l'un de l'autre, dans lequel la distance entre le flotteur (2) et le clapet (6) dans la position de fonctionnement est déterminée par un élément de retenue (16),
et l'élément de retenue est une butée (16) prévue sur l'élément de suspension (4), la position de la butée (16) étant réglable le long de l'élément de suspension (4).

2. Dispositif de fermeture automatique selon la revendication 1, dans lequel l'élément de suspension (4) est constitué au moins en partie par un élément souple, semblable à un câble.

3. Dispositif de fermeture automatique selon la revendication 1 ou 2, dans lequel l'élément de suspension est constitué au moins en partie par un élément rigide, semblable à une tige.

4. Dispositif de fermeture automatique selon l'une quelconque des revendications précédentes, dans lequel la mise en prise amovible entre le flotteur (2) et le clapet (6) est réalisée par un ajustement amovible par forme ou friction entre les deux éléments.

5. Dispositif de fermeture automatique selon l'une quelconque des revendications précédentes, dans lequel le clapet (6) a un sommet conique.

6. Dispositif de fermeture automatique selon la revendication 5, dans lequel le flotteur (2) a un jeu conique au fond qui correspond au sommet conique du clapet (6) afin de permettre la mise en prise entre les deux éléments.

7. Dispositif de fermeture automatique selon l'une quelconque des revendications précédentes, dans lequel le flotteur (2) a un sommet conique.

8. Dispositif de fermeture automatique selon l'une quelconque des revendications précédentes, incluant en outre un dispositif de verrouillage (20) pour empêcher le flotteur (2) et le clapet (6) d'être chassés du séparateur (12).

9. Dispositif de fermeture automatique selon l'une quelconque des revendications précédentes, incluant en outre un tuyau de guidage (10) dans lequel le flotteur (2) et le clapet (6) sont prévus de façon mobile.

10. Dispositif de fermeture automatique selon les revendications 8 et 9, dans lequel le dispositif de verrouillage est constitué par un ressort de verrouillage (20) agencé dans la zone supérieure du tuyau de guidage (10).

11. Procédé de montage d'un dispositif de fermeture automatique à l'intérieur d'un séparateur de liquide léger (12) comme un séparateur d'huile, incluant les étapes consistant à :
prévoir un flotteur (2) agencé pour flotter sur une surface de liquide à l'intérieur du séparateur (12),
prévoir un clapet (6) pour fermer de manière sélective une évacuation (14) du séparateur (12), et
prévoir un élément de suspension (4) pour suspendre tant le clapet (6) que le flotteur (2) à l'intérieur du séparateur (12),
**caractérisé en ce que**
le flotteur (2) est mis en prise avec le clapet (6), le dispositif est monté dans le séparateur (12) tandis que le flotteur (2) est mis en prise avec le clapet (6), et
le flotteur (2) est par la suite dégagé du clapet (6) et espacé d'une certaine distance de ce dernier, laquelle distance est déterminée au moyen d'un élément de retenue (16).

12. Procédé selon la revendication 11, incluant l'étape supplémentaire consistant à mettre en prise le flotteur (2) et le clapet (6) pour les démonter du séparateur (12).
